# NEUE EUROPÄISCHE PATENTSCHRIFT

(11) **EP 1 508 715 B2**
(45) Veröffentlichungstag und Bekanntmachung des Hinweises auf die Entscheidung über den Einspruch: **02.11.2011**
(45) Hinweis auf die Patenterteilung: 16.04.2008
(21) Anmeldenummer: 04019139.7
(22) Anmeldetag: 12.08.2004
(51) Int. Cl.: F16D 23/12, F16D 21/06

(54) **Betätigungseinrichtung zur Betätigung der Kupplungsbereiche einer Doppelkupplung**
Actuation device for a twin clutch
Dispositif d'actionnement d'un embrayage double

(30) Priorität: 19.08.2003 DE 10337960
(43) Veröffentlichungstag der Anmeldung: 23.02.2005
(73) Patentinhaber: ZF Friedrichshafen AG, 88046 Friedrichshafen (DE)
(72) Erfinder: Pagels, Olaf, 97493 Bergrheinfeld (DE); Heiartz, Markus, 97084 Würzburg (DE); Conrad, Matthias, 97273 Kürnach (DE)

(56) Entgegenhaltungen:
- WO-A-03/081069
- DE-A1- 1 505 577
- DE-A1- 3 138 208
- DE-A1- 10 000 893
- DE-A1- 10 036 675
- DE-C- 887 589
- DE-C1- 3 418 772
- DE-U- 7 306 062
- DE-U- 7 637 760
- GB-A- 1 037 523
- US-A- 3 892 302

## Beschreibung

Die vorliegende Erfindung betrifft eine Betätigungseinrichtung zur Betätigung der Kupplungsbereiche einer Doppelkupplung, wie im Oberbegriff des Anspruchs 1 definiert.

Derartige Doppelkupplungen finden im Fahrzeugbau zunehmend Anwendung, da sie einerseits ein nahezu zugkraftunterbrechungsfreies Schalten gestatten, andererseits die Durchführung wesentlich schnellerer Schaltvorgänge ermöglichen. Um bei Durchführung von Schaltvorgängen die Kupplungsbereiche einer derartigen Doppelkupplung einzurücken bzw. auszurücken, ist es erforderlich, in diese Kupplungsbereiche eine Betätigungskraft einzuleiten. Bei Kupplungsbereichen des Normal-Offen-Typs ist diese Betätigungskraft eine Einrückkraft, so dass derartige Kupplungsbereiche aktiv eingerückt gehalten werden und zur Durchführung von Ausrückvorgängen die Betätigungskraft gemindert bzw. aufgehoben wird. Bei Kupplungen bzw. Kupplungsbereichen des Normal-Geschlossen-Typs ist diese Betätigungskraft eine Ausrückkraft, so dass durch Bereitstellen einer derartigen Betätigungskraft entgegen der Einrückkraft eines Kraftspeichers gearbeitet wird, um die Kupplung aktiv in den Ausrückzustand zu bringen.

Zur Betätigung derartiger Doppelkupplungen ist es beispielsweise möglich, so genannte Rampenausrücker zu benutzen, bei welchen die Bewegung oder Verschiebung eines mit Rampen versehenen Bauteils eine Verlagerung eines anderen Bauteils induziert. Hier bestehen jedoch insbesondere bei größeren Betätigungskräften elementare Reibkräfte, die zu hohen Reibverlusten bzw. einer entsprechend hohen Trägheit und Abnutzung führen können. Auch ist es bekannt, ineinander geschachtelte Nehmerzylindersysteme bereitzustellen, die jedoch aufwendige Hydrauliksysteme bzw. Hydraulikzuführungen erforderlich machen. Die Übertragung bzw. Einleitung von Betätigungskräften durch so genannte Kugelgewindetriebe ist ebenfalls bekannt, erfordert jedoch vergleichsweise komplizierte Geometrien an den involvierten Bauteilen.

Aus der US 3 892 302 ist eine Zweischeibenkupplung entnehmbar, bei der mittels eines scherenartig gelagerten Betätigungshebelmechanismus zwei Ausrücklager beide Kupplungsscheiben gleichzeitig einkuppeln. Hierbei wirken diese auf eine gemeinsame Membranfeder ein. Ziel ist hier ein für beide Kupplungsscheiben ein annähernd gleiches Einkuppeln für die Kraftübertragung auf die eine Getriebeingangswelle zu erhalten.

Aus der DE 31 38 208 A1 ist eine in Form einer Doppelkupplung ausgebildete Kraftübertragungseinrichtung für Kraftfahrzeuge bekannt. Zur Betätigung dieser Doppelkupplung ist eine mit zwei Hebelanordnungen ausgebildete Betätigungseinrichtung vorgesehen, wobei für jeden Kupplungsbereich der Doppelkupplung eine der Hebelanordnungen wirksam ist. Die beiden Hebelanordnungen umfassen einen bezüglich einer Drehachse im Wesentlichen radial sich erstreckenden Hebel, der an seinem radial äußeren Endbereich durch einen Aktuator beaufschlagbar ist, in seinem radial inneren Endbereich über ein Drehentkopplungslager auf den zugeordneten Kupplungsbereich einwirkt und zwischen seinem radial äußeren Endbereich und seinem radial inneren Endbereich vermittels einer Kugelgelenk-Lagerungsanordnung an einem Gehäuse schwenkbar getragen ist. Die beiden Hebelanordnungen bzw. die Hebelelemente derselben sind bezüglich der Drehachse einander diametral gegenüberliegend angeordnet.

Das deutsche Gebrauchsmuster GM 7637760 offenbart eine Doppelreibungskupplung mit einer dieser zugeordneten Betätigungseinrichtung. Die Betätigungseinrichtung umfasst zwei ineinander geschachtelt ausgebildete Hebelelemente. In ihrem radial inneren Endbereich sind die Hebelelemente durch ein Aktuatorsystem beaufschlagbar. Eines der Hebelelemente beaufschlagt den zugeordneten Kupplungsbereich über seinen radial äußeren Endbereich und ist zwischen seinem radial äußeren Endbereich und seinem radial inneren Endbereich auf einer Schwenkachse schwenkbar getragen. Das andere der Hebelelemente ist mit seinem radial äußeren Endbereich auf dieser Schwenkachse ebenfalls schwenkbar getragen und beaufschlagt zwischen seinem radial äußeren Endbereich und seinem radial inneren Endbereich den zugeordneten Kupplungsbereich. Die die beiden Hebelelemente schwenkbar tragende Schwenkachse bzw. dessen Längsachse liegt in einer zur Drehachse im Wesentlichen orthogonalen Ebene und bezüglich der Drehachse der Kupplung nach radial außen versetzt.

Es ist die Aufgabe der vorliegenden Erfindung, eine Betätigungseinrichtung zur Betätigung der Kupplungsbereiche einer Doppelkupplung vorzusehen, welche bei einfachem und Kompaktem Aufbau zuverlässig arbeitet.

Erfindungsgemäß wird diese Aufgabe gelöst durch eine Betätigungseinrichtung entsprechend dem geltenden Anspruch 1. Auf diese Art und Weise wird eine sehr verschleißarme Wechselwirkung der Hebelelemente mit den zugeordneten Lagerungselementen erreicht.

Durch das Bereitstellen der Hebelanordnungen für die verschiedenen Kupplungsbereiche wird eine einfache Möglichkeit der Krafteinleitung in die jeweiligen Kupplungsbereiche vorgesehen, wobei insbesondere auch durch definierte Einstellung der Hebelverhältnisse eine entsprechende Kraft- bzw. Wegübersetzung oder -untersetzung erzielbar ist, und zwar bei sehr einfachem und betriebssicherem Aufbau.

Es ist beispielsweise möglich, dass an den Hebelelementen der Hebelanordnungen der jeweilige Lagerungsbereich eine Gelenkpfanne aufweist und dass an den Lagerungselementen jeweils eine Gelenkkugel vorgesehen ist.

Um eine platzsparende Anordnung der Hebelelemente realisieren zu können, greift das Lagerungselement von einer der Hebelanordnungen durch das Hebelelement der anderen der Hebelanordnungen hindurch.

Weiterhin kann vorgesehen sein, dass ein Verbund-Lagerungselement zwei Lagerungsabschnitte bereitstellt, wobei jeder Lagerungsabschnitt mit einem Lagerungsbereich von einem der beiden Hebelelemente zusammenwirkt. Um dabei das Zusammenfügen der erfindungsgemäßen Einrichtung einfach vornehmen zu können, wird vorgeschlagen, dass das Lagerungselement von einer der Hebelanordnungen zum Bilden des Verbund-Lagerungselements an dem Lagerungselement der anderen der Hebelanordnungen getragen ist.

Bei einer alternativen Ausgestaltungsform kann vorgesehen sein, dass das Lagerungselement von einer der Hebelanordnungen seitlich versetzt zu dem Lagerungselement der anderen der Hebelanordnungen angeordnet ist.

Bei der erfindungsgemäßen Einrichtung ist weiter vorgesehen, dass bei jedem der Hebelelemente der Hebelanordnungen der Lagerungsbereich zwischen dem ersten Beaufschlagungsbereich und dem zweiten Beaufschlagungsbereich vorgesehen ist.

Um bei einer nur wenig Bauraum beanspruchenden Anordnung dafür sorgen zu können, dass eine gegenseitige Störung der beiden Hebelelemente im Betrieb nicht auftreten kann, sind die Hebelelemente der Hebelanordnungen wenigstens bereichsweise ineinander geschachtelt angeordnet sind, wobei der erste Beaufschlagungsbereich von einem der Hebelelemente nahe dem ersten Beaufschlagungsbereich des anderen der Hebelelemente angeordnet ist und der zweite Beaufschlagungsbereich des einen der Hebelelemente nahe dem zweiten Beaufschlagungsbereich des anderen der Hebelelemente angeordnet ist. Insbesondere ist es dabei möglich, dass wenigstens eines der Hebelelemente schalenartig ausgebildet ist und das andere der Hebelelemente wenigstens bereichsweise in das eine Hebelelement eingreifend angeordnet ist.

Um die erfindungsgemäße Einrichtung in einfacher Art und Weise mit den jeweiligen zugeordneten Kupplungsbereichen wirken zu lassen, dabei gleichzeitig auch die Möglichkeit einer Drehentkopplung bereitstellen zu können, wird vorgeschlagen, dass die Hebelelemente der Hebelanordnungen in ihrem zweiten Beaufschlagungsbereich gabelartig ausgebildet sind. Mit diesen gabelartigen Beaufschlagungsbereichen können die Hebelelemente dann Ausrücklager beaufschlagen, die die beiden koaxial zueinander angeordneten Getriebeeingangswellen umgebend angeordnet sind.

Die vorliegende Erfindung wird nachfolgend mit Bezug auf die beiliegenden Zeichnungen detailliert beschrieben. Es zeigt:
Fig. 1 eine perspektivische Ansicht einer erfindungsgemäßen Betätungseinrichtung;
Fig. 2 eine Schnittansicht der in Fig. 1 dargestellten Betätigungseinrichtung;
Fig. 3 die Betätigungseinrichtung der Figuren 1 und 2 in Verbindung mit einer Doppelkupplung;
Fig. 4 eine der Fig. 1 entsprechende Ansicht einer alternativ ausgestalteten Betätigungseinrichtung;
Fig. 5 eine Schnittansicht der in Fig. 4 dargestellten Betätigungseinrichtung.

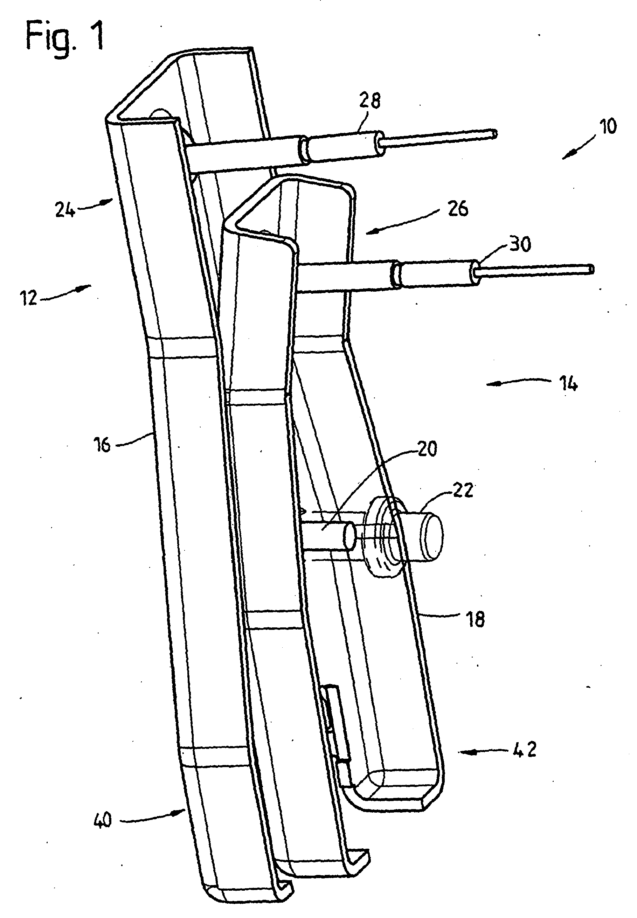

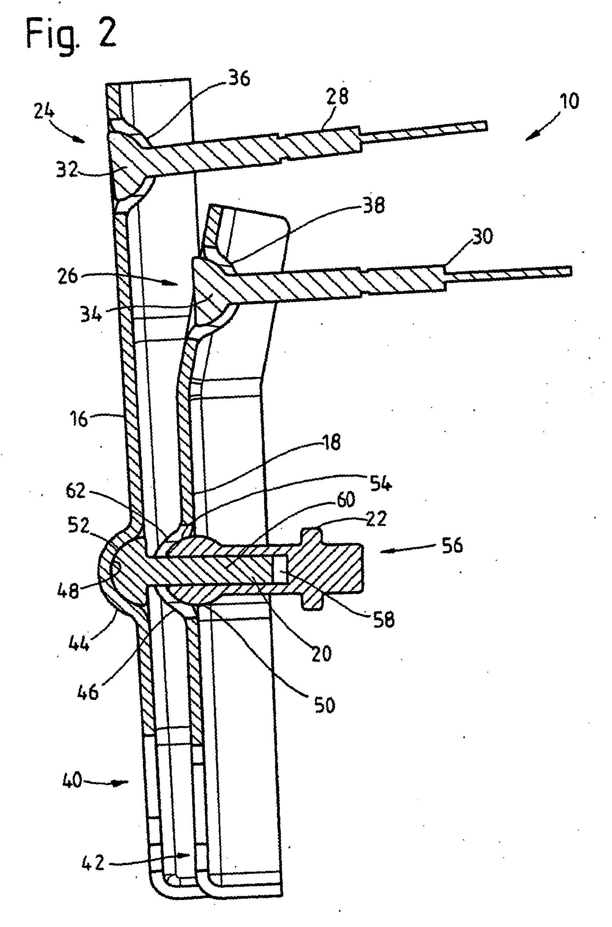

In den Figuren 1 und 2 ist eine erfindungsgemäße Betätigungseinrichtung für eine Doppelkupplung allgemein mit 10 bezeichnet. Diese Betätigungseinrichtung 10 umfasst zwei Hebelanordnungen 12, 14. Jede Hebelanordnung 12, 14 wiederum umfasst ein langgestrecktes Hebelelement 16, 18 und diesem zugeordnet ein bolzenartiges Lagerungselement 20 bzw. 22.

Jedes der Hebelelemente 16, 18 ist im Wesentlichen schalenartig aufgebaut, so dass es quer zu seiner Längsrichtung einen im Wesentlichen U-förmigen Querschnitt bereitstellt. Die Hebelelemente 16, 18 können als Blechformteil bereitgestellt werden. Ferner weist jedes der Hebeleelemente 16, 18 einen ersten Beaufschlagungsbereich 24, 26 auf. In diesen ersten Beaufschlagungsbereichen 24, 26 können die Hebelelemente 16, 18 mit einer Betätigungskraft beaufschlagt werden. In dem in den Figuren 1 und 2 dargestellten Falle kann dies beispielsweise durch Zugkrafteinleitung vermittels Bowdenzugseelenelementen 28, 30 erfolgen. Diese können einen kugel- oder zylinderartig erweiterten Endbereich 32, 34 aufweisen, wobei diese Endbereiche 32, 34 in entsprechend geformten Schalenbereichen 36, 38 in den ersten Beaufschlagungsbereichen 24, 26 aufgenommen sind und somit einen verspannungsfreien Kopplungseingriff auch beim Verschwenken der Hebelelemente 16, 18 ermöglichen.

In ihren in Längsrichtung betrachtet anderen Endbereichen weisen die Hebelelemente 16, 18 jeweils einen zweiten Beaufschlagungsbereich 40 bzw. 42 auf. In diesen zweiten Beaufschlagungsbereichen 40, 42 sind, wie insbesondere in Fig. 1 erkennbar, die Hebelelemente 16, 18 gabelartig ausgebildet und können somit jeweilige Getriebeeingangswellen seitlich umgreifend mit nachfolgend noch beschriebenen Drehentkopplungslagern direkt oder über Übertragungsglieder mit kreisartiger oder zylindrischer Form zusammenwirken.

In einem zwischen den jeweiligen ersten und zweiten Beaufschlagungsbereichen 24, 26 und 40, 42 gelegenen Längenbereich weisen die beiden Hebelelemente 16, 18 jeweils einen Lagerungsbereich 44, 46 auf. Die beiden Lagerungsbereiche bilden jeweils Einsenkungen, die nach Art von Gelenkpfannen 48, 50 jeweils auf Gelenkkugelbereichen 52, 54 der bolzenartigen Lagerungselemente 20, 22 abgestützt sind. Auf diese Art und Weise sind die Hebelelemente 16, 18 im Wesentlichen frei und ohne der Erzeugung großer Reibkräfte auf den Lagerungselementen 20, 22 schwenkbar abgestützt. Wird bei Darstellung der in Fig. 2 gezeigten Anordnung jeweils an den ersten Beaufschlagungsbereichen 24, 26 ziehend angegriffen, werden diese also in der Darstellung der Fig. 2 nach rechts gezogen, so verschwenken die Hebelelemente 16, 18 im Uhrzeigersinn und die zweiten Beaufschlagungsbereiche 40, 42 bewegen sich in der Darstellung der Fig. 2 nach links, also im Anwendungsfalle dann auf einen jeweiligen Kupplungsbereich zu.

Man erkennt in den Figuren 1 und 2 weiter, dass die beiden Lagerungselemente 20, 22 ein Verbund-Lagerungselement 56 bilden. Hierzu ist in dem dem Hebelelement 18 zugeordneten Lagerungselement 22 eine zentrale, auch den Gelenkkopf 54 desselben durchsetzende Öffnung 58 vorgesehen, in welche ein Stiftabschnitt 60 des anderen Lagerungselements 20 eingesetzt ist. Dieser Stiftabschnitt 60 des Lagerungselements 20 durchsetzt dabei weiterhin eine im Hebelelement 18 vorgesehene Durchgriffsöffnung 62, so dass, nachdem das Hebelelement 18 mit seinem Lagerungsbereich 16 auf den Kugelkopf 54 aufgesetzt worden ist und der Stiftabschnitt 60 dann in die Öffnung 58 eingeführt worden ist, das Hebelelement 18 weiterhin ungehindert auf dem zugeordneten Lagerungselement 22 verschwenkbar ist.

Man erkennt in den Figuren 1 und 2 weiter, dass durch die Ausgestaltung der Hebelelemente 16, 18 mit U-förmigem, schalenartigem Querschnitt und die Relativ-Größendimensionierung dieser beiden Hebelelemente 16, 18 das Hebelelement 18 im zusammengesetzten Zustand der Betätigungseinrichtung 10 teilweise in das Hebelelement 16 eingreifend positioniert ist bzw. von dem Hebelelement 16 umgriffen wird. Dabei ist die Relativpositionierung so, dass die beiden ersten Beaufschlagungsbereiche 24, 26 einander benachbart positioniert sind und in entsprechender Weise auch die beiden zweiten Beaufschlagungsbereiche 40, 42 einander benachbart positioniert sind. Auf diese Art und Weise kann ein gegenseitiges Stören bei der Durchführung der Ein- bzw. Ausrückvorgänge vermieden werden. Weiterhin wird durch die ineinander geschachtelte Positionierung der beiden Hebelelemente eine sehr Platz sparende Anordnung geschaffen. Die Ineinanderschachtelung der beiden Hebelelemente 16, 18 ist dabei vorzugsweise derart, dass ein gegenseitiges Berühren auch bei extremen Betätigungsstellungen, d.h. Schwenkstellungen, nicht auftreten kann.

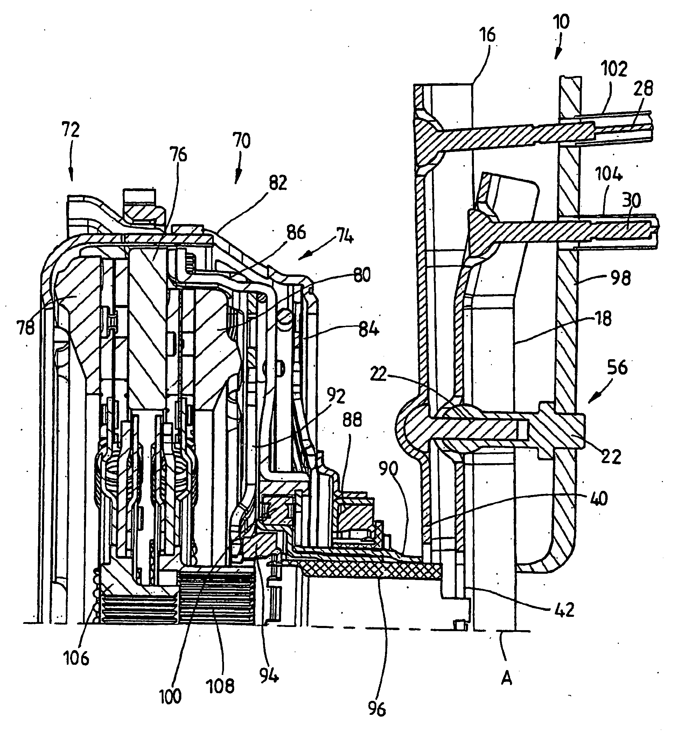

In Fig. 3 ist die vorangehend beschriebene Betätigungseinrichtung 10 in Verbindung mit einer Doppelkupplung 70 dargestellt. Diese Doppelkupplung 70 weist allgemein zwei Kupplungsbereiche 72, 74 auf. Jeder der Kupplungsbereiche weist beidseits einer als Widerlager wirksamen Zwischenplatte 76, die auch drehfest an eine Antriebswelle anzukoppeln ist, eine Anpressplatte 78, 80 auf. Die Betätigungskraft für den Kupplungsbereich 72 wird zur Anpressplatte 78 über eine Betätigungskraftübertragungsanordnung 82 übertragen, welche die Zwischenplatte 76 überbrückt. Eine mit mehreren Hebelelementen oder einem Kraftspeicher ausgestaltete Kraftbeaufschlagungsanordnung 84 stützt sich an einer mit der Zwischenplatte 76 fest verbundenen Gehäuseanordnung 86 einerseits und der Betätigungskraftübertragungsanordnung 82 andererseits ab. Radial innen wird diese Kraftbeaufschlagungsanordnung 84 über ein nur schematisch dargestelltes Drehentkopplungslager 88 beaufschlagt, das wiederum über ein Abstützelement 90 in Kraftwechselwirkung mit dem zweiten Beaufschlagungsbereich 40 des Hebelelements 16 steht.

Die Anpressplatte 80 des Kupplungsbereichs 74 wird über eine Kraftbeaufschlagungsanordnung 92, welche beispielsweise ebenfalls mehrere Hebelelemente oder einen Kraftspeicher umfassen kann, zur Durchführung von Einrückvorgängen bzw. Ausrückvorgängen aktiviert. Diese Kraftbeaufschlagungsanordnung 92 stützt sich radial außen an der Gehäuseanordnung 86 ab und kann radial innen über ein Drehentkopplungslager 94 und ein Abstützelement 96 durch den zweiten Beaufschlagungsbereich 42 des Hebelelements 18 beaufschlagt werden. Um einen Kraftrückschluss innerhalb des aus Doppelkupplung 70 und Betätigungseinrichtung 10 generierten Systems zu erhalten, ist das vorangehend angesprochene Verbund-Lagerungselement 56, umfassend die beiden Lagerungselemente 20, 22, an einem Stützbauteil 98 getragen bzw. abgestützt, das über ein weiteres Drehentkopplungslager 100 axial, d.h. in Richtung einer Drehachse A der Doppelkupplung 70, an der Gehäuseanordnung 86 und somit dem gesamten Eingangsbereich dieser Kupplungsanordnung abgestützt ist. Auf diese Art und Weise wird bei Beaufschlagung der Abstützelemente 90 bzw. 96 durch den jeweils zugeordneten Beaufschlagungsbereich 40, 42 über dieses Bauteil 98 eine Reaktionskraft in die Gehäuseanordnung 86 eingeleitet, so dass externe Bereiche, insbesondere die Axiallager einer Antriebswelle, nicht beaufschlagt werden. Dies kann dadurch noch unterstützt werden, dass bei der dargestellten Anordnung weiterhin die Bowdenzugmäntel 102, 104, welche die jeweiligen Bowdenzugseelen 28, 30 umgeben, auch an diesem Bauteil 98 abgestützt sind.

Auf Grund des völligen Kraftrückschlusses innerhalb des angesprochenen Systems kann das gesamte Modul, umfassend die Doppelkupplung 70 und die Betätigungseinrichtung 10, motorseitig fest angebunden werden, beispielsweise über eine Flexplatte, während ein Längenausgleich dann getriebeseitig durch die Relativpositionierung der Getriebeeingangswellen bezüglich der beiden Kupplungsscheiben 106, 108 erfolgen kann.

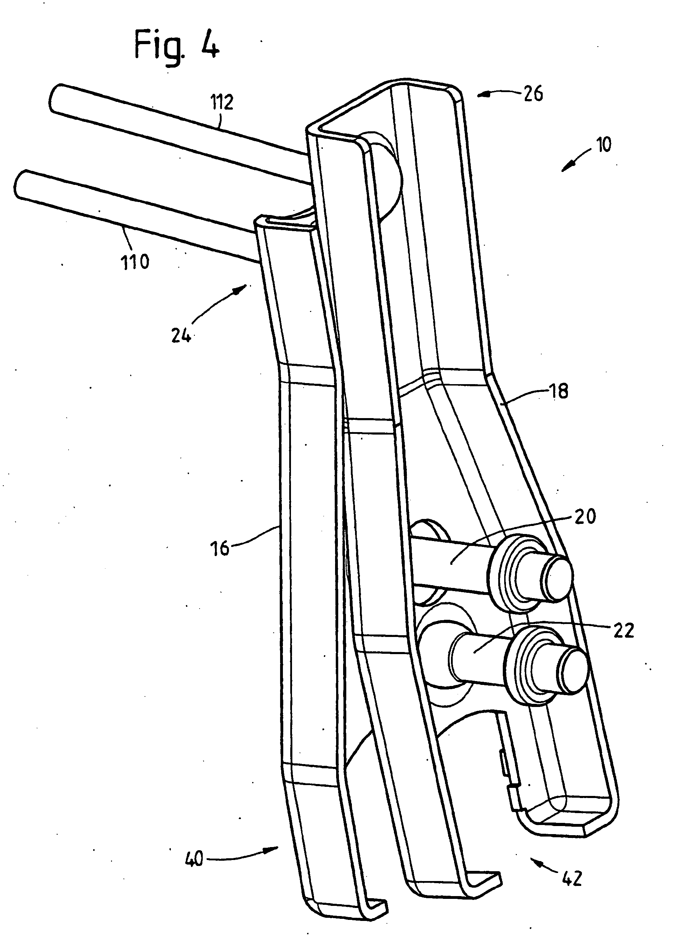

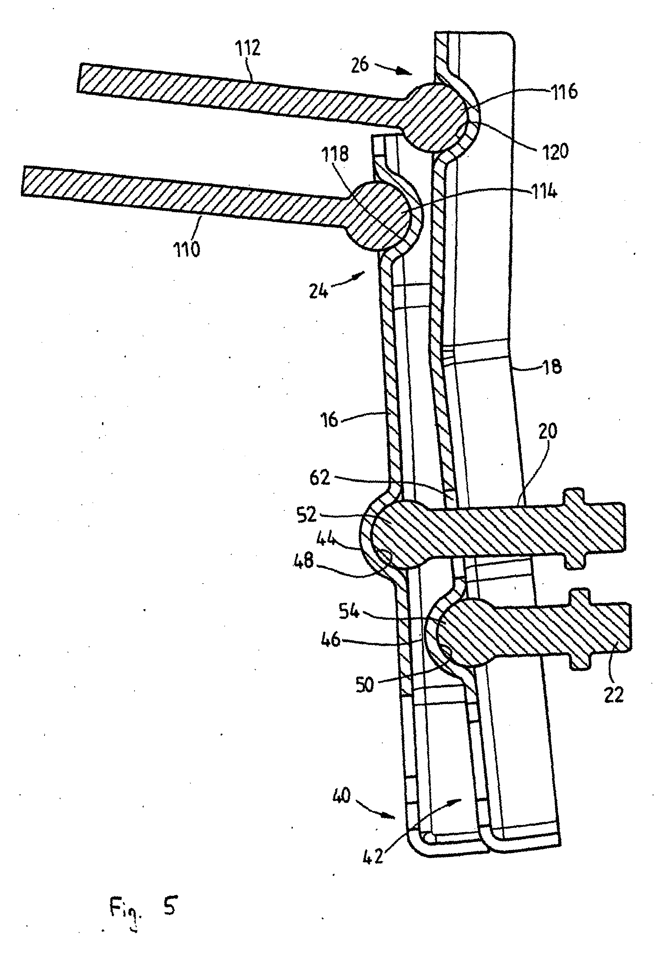

Eine alternative Ausgestaltungsform einer derartigen Betätigungseinrichtung ist in den Figuren 4 und 5 gezeigt. Komponenten, welche vorangehend beschriebenen Komponenten entsprechen, sind mit dem gleichen Bezugszeichen bezeichnet.

Man erkennt, dass hier die beiden bolzenartigen Lagerungselemente 20, 22 als voneinander getrennte Bauteile bereitgestellt sind und beispielsweise in der Längsrichtung der Hebelelemente 16, 18 zueinander versetzt positioniert sind. D.h., die Durchgriffsöffnung 62 für das Lagerungselement 20 ist in der Längsrichtung des Hebelelements 18 versetzt zum Lagerungsbereich 46 desselben angeordnet. In diesem Falle sind auch die beiden Lagerungselemente 20, 22 entsprechend getrennt an dem in der Fig. 3 beispielsweise erkennbaren Bauteil 98 anzubringen.

Die Beaufschlagung der beiden Hebelelemente 16, 18 in ihrem jeweiligen ersten Beaufschlagungsbereich 24, 26 erfolgt hier durch eine Schubkraft ausübende Stösselelemente 110, 112, die mit kugelartig erweiterten Köpfen 114, 116 in zugeordnete pfannenartige Einsenkungen 118, 120 der Hebelelemente 16, 18 eingreifen und somit eine Betätigungskraft in diese einleiten können. Diese Stösselelemente 110, 112 können beispielsweise mit Kolbenelementen von Nehmerzylinderanordnungen gekoppelt sein, wobei diese Nehmerzylinderanordnungen zum Erzeugen eines Kraftrückschlusses beim Eingliedern in ein Antriebssystem wiederum an dem in Fig. 98 dargestellten Bauteil abgestützt sein können.

Durch die vorangehend beschriebenen Ausgestaltungsformen der erfindungsgemäßen Betätigungseinrichtung wird ein sehr kompakter, gleichwohl jedoch sehr zuverlässig wirkender Aufbau bereitgestellt, mit dem auch unter Erzeugung eines Kraftrückschlusses Betätigungskräfte in die beiden Kupplungsbereiche einer Doppelkupplung eingeleitet werden können. Durch die in einfacher Weise realisierbare Ineinanderschachtelung der Hebelelemente und ggf. auch der Lagerungselemente für diese Hebelelemente wird eine sehr kompakte Bauart erlangt.

## Patentansprüche

1. Betätigungseinrichtung zur Betätigung der beiden Kupplungsbereiche (72, 74) einer Doppelkupplung (70), umfassend zwei Hebelanordnungen (12, 14), wobei jede Hebelanordnung (12, 14) ein Hebelelement (16, 18) aufweist, das in einem ersten Beaufschlagungsbereich (24, 26) zur Betätigung eines zugeordneten Kupplungsbereichs (72, 74) mit einer Kraft beaufschlagbar ist und in einem zweiten Beaufschlagungsbereich (40, 42) zur Einwirkung auf den zugeordneten Kupplungsbereich 72, 74) bringbar ist, und ein Lagerungselement (20, 22) aufweist, an welchem das Hebelelement (16,18) in einem Lagerungsbereich (44, 46) schwenkbar gestützt ist wobei bei den Hebelanordnungen (12, 14) das jeweilige Lagerungselement (20, 22) mit dem zugeordneten Lagerungsbereich (44, 46) eines Hebelelements (16, 18) eine Kugelgelenk-Lagerungsanordnung bildet, wobei
bei jedem, der Hebelelemente (16, 18) der Hebelanordnungen (12, 14) der Lagerungsbereich (44, 46) zwischen dem ersten Beaufschlagungsbereich (24, 26) und dem zweiten Beaufschlagungsbereich (40, 42) vorgesehen ist,
**dadurch gekennzeichnet, dass** die Hebelelemente (16, 18) der Hebelanordnungen (12, 14) wenigstens bereichsweise ineinander geschachtelt angeordnet sind, wobei der erste Beaufschlagungsbereich (24) von einem (16) der Hebelelemente (16, 18) nahe dem ersten Beaufschlagungsbereich (26) des anderen (18) der Hebelelemente (16, 18) angeordnet ist und der zweite Beaufschlagungsbereich (40) des einen (16) der Hebelelemente (16,18) nahe dem zweiten Beaufschlagungsbereich (42) des anderen (18) der Hebelelemente (16, 18) angeordnet ist und
das Lagerungselement (20) von einer (12) der Hebelanordnungen (12, 14) durch das Hebelelement (18) der anderen (14) der Hebelanordnungen (12, 14) hindurchgreift.

2. Betätigungseinrichtung nach Anspruch 1,
**dadurch gekennzeichnet, dass** an den Hebelelementen (16, 18) der Hebelanordnungen (12, 14) der jeweilige Lagerungsbereich (44, 46) eine Gelenkpfanne (48, 50) aufweiset und dass an den Lagerungselementen (20, 22) jeweils eine Gelenkkugel (52, 54) vorgesehen ist.

3. Betätigungseinrichtung nach einem der Ansprüche 1 bis 2,
**dadurch gekennzeichnet, dass** ein Verbund-Lagerungselement (56) zwei Lagerungsabschnitte (52, 54) bereitstellt, wobei jeder Lagerungsabschnitt (52, 54) mit einem Lagerungsbereich (44, 46) von einem der beiden Hebelelemente (16, 18) zusammenwirkt.

4. Betätigungseinrichtung nach Anspruch 1, 2 oder 3,
**dadurch gekennzeichnet, dass** das Lagerungselement (20) von einer (12) der Hebelanordnungen (12, 14) zum Bilden des Verbund-Lagerungs-elements (56) an dem Lagerungselement (22) der anderen (14) der Hebelanordnungen (12, 14) getragen ist.

5. Betätigungseinrichtung nach Anspruch 1 oder 2,
**dadurch gekennzeichnet, dass** das Lagerungselement (20) von einer (12) der Hebelanordnungen (12, 14) seitlich versetzt zu dem Lagerungselement (22) der anderen (14) der Hebelanordnungen (12, 14) angeordnet ist.

6. Betätigungseinrichtung nach einem der Ansprüche 1 bis 5,
**dadurch gekennzeichnet, dass** wenigstens eines (16) der Hebelelemente (16, 18) schalenartig ausgebildet ist und das andere (18) der Hebelelemente (16, 18) wenigstens bereichsweise in das eine Hebelelement (16) eingreifend angeordnet ist.

7. Betätigungseinrichtung nach einem der Ansprüche 1 bis 6,
**dadurch gekennzeichnet, dass** die Hebelelemente (16, 18) der Hebelanordnungen (12, 14) in ihrem zweiten Beaufschlagungsbereich (40, 42) gabelartig ausgebildet sind.

## Claims

1. Actuating device for actuating the two clutch regions (72, 74) of a dual clutch (70), comprising two lever arrangements (12, 14), with each lever arrangement (12, 14) having a lever element (16, 18) which, in a first loading region (24, 26), can be acted on with a force in order to actuate an associated clutch region (72, 74), and in a second loading region (40, 42), can act on the associated clutch region (72, 74), and a mounting element (20, 22) on which the lever element (16, 18) is pivotably supported in a mounting region (44, 46), therein, in the lever arrangements (12, 14), the respective mounting element (20, 22) forms a ball joint mounting arrangement with the associated mounting region (44, 46) of a lever element (16, 18), wherein, in each of the lever elements (16, 18) of the lever arrangements (12, 14), the mounting region (44, 46) is provided between the first loading region (24, 26) and the second loading region (40, 42), **characterized in that** the lever elements (16, 18) of the lever arrangements (12, 14) are arranged at least in regions so as to be nested one inside the other, with the first loading region (24) of one (16) of the lever elements (16, 18) being arranged close to the first loading region (26) of the other (18) of the lever elements (16, 18), and the second loading region (40) of the one (16) of the lever elements (16, 18) being arranged close to the second loading region (42) of the other (18) of the lever elements (16, 18), and the mounting element (20) of one (12) of the lever arrangements (12, 14) extends through the lever element (18) of the other (14) of the lever arrangements (12, 14).

2. Actuating device according to Claim 1,
**characterized in that**, on the lever elements (16, 18) of the lever arrangements (12, 14), the respective mounting region (44, 46) has a joint socket (48, 50), and **in that** in each case one joint ball (52, 54) is provided on the mounting elements (20, 22).

3. Actuating device according to one of Claims 1 to 2,
**characterized in that** a composite mounting arrangement (56) provides two mounting sections (52, 54), with each mounting section (52, 54) interacting with a mounting region (44, 46) of one of the two lever elements (16, 18).

4. Actuating device according to Claim 1, 2 or 3,
**characterized in that** the mounting element (20) of one (12) of the lever arrangements (12, 14) is, in order to form the composite mounting element (56), supported on the mounting element (22) of the other (14) of the lever arrangements (12, 14).

5. Actuating device according to Claim 1 or 2,
**characterized in that** the mounting element (20) of one (12) of the lever arrangements (12, 14) is arranged so as to be laterally offset with respect to the mounting element (22) of the other (14) of the lever arrangements (12, 14).

6. Actuating device according to one of Claims 1 to 5,
**characterized in that** at least one (16) of the lever elements (16, 18) is of shell-like design and the other (18) of the lever elements (16, 18) is arranged at least in regions so as to engage into the one lever element (16).

7. Actuating device according to one of Claims 1 to 6,
**characterized in that** the lever elements (16, 18) of the lever arrangements (12, 14) are of fork-like design in their second loading region (40, 42).

## Revendications

1. Dispositif d'actionnement pour l'actionnement des deux régions d'embrayage (72, 74) d'un double embrayage (70), comprenant deux agencements de levier (12, 14), chaque agencement de levier (12, 14) présentant un élément de levier (16, 18) qui peut être sollicité par une force dans une première région de sollicitation (24, 26) pour l'actionnement d'une région d'embrayage associée (72, 74) et qui peut être amené dans une deuxième région de sollicitation (40, 42) pour agir sur la région d'embrayage associée (72, 74), et qui présente un élément de support sur palier (20, 22) sur lequel l'élément de levier (16, 18) est supporté de manière pivotante dans une région de support sur palier (44, 46), **caractérisé en ce que** l'élément de support sur palier respectif (20, 22), dans les agencements de levier (12, 14), formant avec la région de support sur palier associée (44, 46) d'un élément de levier (16, 18), un agencement de support sur palier à articulation sphérique, pour chacun des éléments de levier (16, 18) des agencements de levier (12, 14), la région de support sur palier (44, 46) étant prévue entre la première région de sollicitation (24, 26) et la deuxième région de sollicitation (40, 42), **caractérisé en ce que** les éléments de levier (16, 18) des agencements de levier (12, 14) sont disposés de manière emboîtée les uns dans les autres au moins en partie, la première région de sollicitation (24) de l'un (16) des éléments de levier (16, 18) étant disposée à proximité de la première région de sollicitation (26) de l'autre (18) des éléments de levier (16, 18), et la deuxième région de sollicitation (40) de l'un (16) des éléments de levier (16, 18) étant disposée à proximité de la deuxième région de sollicitation (42) de l'autre (18) des éléments de levier (16, 18), et l'élément de support sur palier (20) de l'un (12) des agencements de levier (12, 14) traverse l'élément de levier (18) de l'autre (14) des agencements de levier (12, 14).

2. Dispositif d'actionnement selon la revendication 1,
**caractérisé en ce que** la région de support sur palier (44, 46) respective sur les éléments de levier (16, 18) des agencements de levier (12, 14) présente une cavité articulée (48, 50) et **en ce qu'**une sphère articulée (52, 54) est prévue respectivement sur les éléments de support sur palier (20, 22).

3. Dispositif d'actionnement selon l'une quelconque des revendications 1 à 2,
**caractérisé en ce qu'**un élément de support sur palier composite (56) fournit deux portions de support sur palier (52, 54), chaque portion de support sur palier (52, 54) coopérant avec une région de support sur palier (44, 46) de l'un des deux éléments de levier (16, 18).

4. Dispositif d'actionnement selon la revendication 1, 2 ou 3,
**caractérisé en ce que** l'élément de support sur palier (20) est porté par l'un (12) des agencements de levier (12, 14) pour former l'élément de support sur palier composite (56) sur l'élément de support sur palier (22) de l'autre (14) des agencements de levier (12, 14).

5. Dispositif d'actionnement selon la revendication 1 ou 2,
**caractérisé en ce que** l'élément de support sur palier (20) de l'un (12) des agencements de levier (12, 14) est disposé de manière décalée latéralement par rapport à l'élément de support sur palier (22) de l'autre (14) des agencements de levier (12, 14).

6. Dispositif d'actionnement selon l'une quelconque des revendications 1 à 5, **caractérisé en ce qu'**au moins l'un (16) des éléments de levier (16, 18) est réalisé sous forme de coque et l'autre (18) des éléments de levier (16, 18) est disposé au moins en partie de manière à venir en prise dans l'élément de levier (16).

7. Dispositif d'actionnement selon l'une quelconque des revendications 1 à 6,
**caractérisé en ce que** les éléments de levier (16, 18) des agencements de levier (12, 14) sont réalisés en forme de fourche dans leur deuxième région de sollicitation (40, 42).
